# FASCICULE DE BREVET EUROPEEN

(11) **EP 3 642 031 B1**
(45) Date de publication et mention de la délivrance du brevet: **06.10.2021**
(21) Numéro de dépôt: 18749443.0
(22) Date de dépôt: 22.06.2018
(51) Int. Cl.: B32B 18/00, C04B 35/117, C04B 35/14, C04B 35/18, C04B 35/185, C04B 35/626, C04B 35/80

(54) **PROCÉDÉ DE FABRICATION D'UNE PRÉFORME FIBREUSE CHARGÉE DE PARTICULES**
VERFAHREN ZUR HERSTELLUNG EINER MIT PARTIKELN GEFÜLLTEN FASERVORFORM
PROCESS FOR MANUFACTURING A FIBROUS PREFORM FILLED WITH PARTICLES

(30) Priorité: 23.06.2017 FR 1755787
(43) Date de publication de la demande: 29.04.2020
(73) Titulaire: Safran Ceramics, 33185 Le Haillan (FR); IRT Saint Exupery, 31432 Toulouse (FR)
(72) Inventeur: DISS, Pascal, 77550 Moissy-Cramayel (FR); DELIANE, Florent, 33800 Bordeaux (FR); DUEE, Natacha, 33400 Talence (FR)
(74) Mandataire: Cabinet Beau de Loménie
(86) Numéro de dépôt international: PCT/FR2018/051515
(87) Numéro de publication internationale: WO 2018/234714

(56) Documents cités:
- WO-A1-2016/016388
- WO-A1-2016/102839
- WO-A1-2017/220727
- FR-A1- 2 645 852
- US-A- 4 983 422
- Product Guide: "Ethylene Glycol", , 1 janvier 2008 (2008-01-01), XP055450445, Extrait de l'Internet: URL:http://www.meglobal.biz/media/product_ guides/MEGlobal_MEG.pdf [extrait le 2018-02-12]

## Description

La présente invention concerne un procédé de fabrication d'une préforme fibreuse chargée de particules en oxyde céramique, ainsi que la fabrication d'une pièce en matériau composite à partir d'une telle préforme.

### Arrière-plan de l'invention

Il est connu de former la préforme d'une pièce en matériau composite à matrice oxyde par empilement d'une pluralité de strates fibreuses imprégnées par une suspension de particules oxyde dans un milieu liquide, par exemple du document WO2016/102839, qui utilise un milieu liquide, que vient d'une barbotine qui peut comporter une phase aqueuse présentant un pH acide (i.e. un pH inférieur à 7) et/ou une phase alcoolique comportant de l'éthanol.

Une fois formé, l'empilement est compacté afin de fixer son épaisseur finale. On réalise ensuite une étape de séchage afin d'éliminer le milieu liquide de la suspension. La matrice oxyde est ensuite formée dans la porosité de la préforme fibreuse obtenue, par frittage des particules.

Il est toutefois souhaitable d'améliorer les propriétés mécaniques présentées par les pièces obtenues par de telles techniques.

### Objet et résumé de l'invention

L'invention vise, selon un premier aspect, un procédé de fabrication d'une préforme fibreuse chargée de particules, le procédé comprenant au moins l'étape suivante :
- formation de la préforme chargée par compactage d'un empilement d'une pluralité de strates fibreuses imprégnées par une suspension de particules en oxyde céramique dans un milieu liquide,
le milieu liquide comportant au moins un composé ayant une pression de vapeur saturante inférieure à 2,3 kPa (2300 Pa) à 20°C, ce composé étant présent en une teneur massique supérieure ou égale à 30% par rapport au poids total de la suspension, les particules étant présentes en une teneur massique, par rapport au poids total de la suspension, comprise entre 40% et 70%.

Les inventeurs ont constaté que les limitations des techniques de l'art antérieur provenaient de l'évaporation rapide du milieu liquide de la suspension. Cette évaporation conduit à un assèchement précoce des strates fibreuses lequel affecte leur déformabilité et leur pouvoir adhésif, et résulte en une délamination prématurée de l'empilement formé si le procédé n'est pas réalisé suffisamment rapidement. En outre, cet assèchement conduit à une augmentation de la viscosité de la suspension rendant plus difficile son écoulement dans le réseau fibreux durant le compactage.

L'invention est remarquable en ce qu'elle met en œuvre une suspension comprenant, à raison d'au moins 30% en masse, un composé à l'état liquide ayant une pression de vapeur saturante plus faible que celle de l'eau ou des alcools typiquement utilisés dans les suspensions de l'art antérieur. La présence de ce composé permet de retarder l'évaporation du milieu liquide par rapport aux suspensions de l'art antérieur. Ainsi, les strates conservent plus longtemps une bonne déformabilité et un bon pouvoir adhésif, réduisant le risque de délamination de l'empilement. En outre, cette suspension s'écoule aisément lors du compactage, conduisant à la répartition souhaitée pour les charges au sein de la préforme fibreuse, et donc aux propriétés mécaniques visées pour la pièce à obtenir.

Dans la suite par souci de concision, le « composé ayant une pression de vapeur saturante inférieure à 2,3 kPa à 20°C » sera désigné par le terme « composé ».

Dans un exemple de réalisation, le composé a une pression de vapeur saturante inférieure ou égale à 0,6 kPa (600 Pa) à 20°C.

Une telle caractéristique permet avantageusement de réduire davantage encore la vitesse d'évaporation du milieu liquide.

Dans un exemple de réalisation, le composé est choisi parmi : le glycérol, les esters lactiques, le diméthyl-2-méthylglutarate, et leurs mélanges.

La mise en œuvre de ces composés spécifiques permet avantageusement de conférer à la suspension une vitesse d'évaporation particulièrement réduite.

En particulier, le composé peut être le glycérol.

Dans un exemple de réalisation, le compactage est effectué par tirage de vide.

La bonne capacité d'écoulement de la suspension peut être mise à profit afin de réaliser le compactage par une technique de tirage de vide qui met en œuvre une pression relativement faible. Cet exemple de réalisation s'affranchit de l'emploi d'un autoclave ou d'une presse utilisant des pressions supérieures pour réaliser le compactage. Le risque d'endommager l'empilement fibreux lors du compactage est ainsi réduit.

Dans un exemple de réalisation, la teneur volumique des particules dans la suspension est supérieure ou égale à 25% par rapport au volume total de la suspension. En particulier, la suspension peut comprendre les particules en une teneur volumique, par rapport au volume total de la suspension, comprise entre 25% et 50%.

L'utilisation d'une suspension ayant un taux volumique de particules élevé conduit à une matrice présentant un taux de porosité particulièrement réduit, sans nécessiter d'étape d'imprégnation supplémentaire.

Dans un exemple de réalisation, le milieu liquide comprend :
- le composé en une teneur massique, par rapport au poids total de la suspension, comprise entre 30% et 50%, et
- un solvant, différent du composé, en une teneur massique, par rapport au poids total de la suspension, comprise entre 5% et 30%, par exemple entre 10% et 30%, et
- optionnellement un liant organique en une teneur massique, par rapport au poids total de la suspension, comprise entre 1% et 15%, par exemple entre 3% et 10%, et optionnellement
- un dispersant en une teneur massique, par rapport au poids total de la suspension, comprise entre 0,1% et 1,5%, par exemple entre 0,5% et 1%.

Dans un exemple de réalisation, les strates fibreuses sont formées de fibres en oxyde céramique.

Dans un exemple de réalisation, le procédé comprend, avant l'étape de compactage, une étape de formation de l'empilement en déposant les strates à l'état sec, la strate déposée étant imprégnée par la suspension avant le dépôt de la strate suivante.

En variante, le procédé comprend, avant l'étape de compactage, une étape de formation de l'empilement par superposition de strates pré-imprégnées par la suspension.

L'invention vise, selon un deuxième aspect, un procédé de fabrication d'une pièce en matériau composite, le procédé comprenant au moins l'étape suivante :
- formation d'une préforme chargée par mise en œuvre d'un procédé tel que décrit plus haut, et
- formation d'une matrice dans la porosité de la préforme chargée par frittage des particules.

### Brève description des dessins

D'autres caractéristiques et avantages de l'invention ressortiront de la description suivante, donnée à titre non limitatif, en référence aux dessins annexés, sur lesquels :
- la figure 1 est un ordinogramme montrant différentes étapes d'un premier exemple de procédé selon l'invention,
- la figure 2 est un ordinogramme montrant différentes étapes d'un deuxième exemple de procédé selon l'invention, et
- la figure 3 illustre, de manière schématique, une réalisation possible pour l'étape de compactage dans le cadre de la présente invention.

### Description détaillée de modes de réalisation

L'empilement formé par une pluralité de strates fibreuses imprégnées par la suspension est tout d'abord réalisé. Les fibres formant les strates peuvent comporter de l'alumine, voire un mélange d'alumine et de silice. On peut utiliser les fibres commercialisées sous la référence « Nextel » par la société 3M.

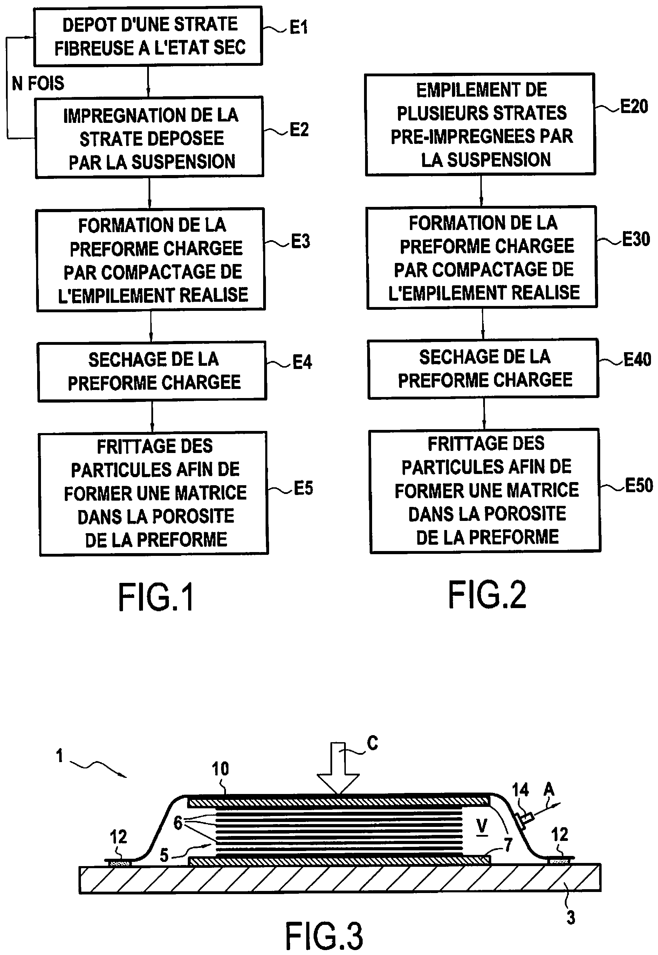

Dans l'exemple de procédé illustré à la figure 1, une première strate fibreuse à l'état sec est tout d'abord déposée sur un support (étape E1). La première strate déposée est ensuite imprégnée par la suspension comprenant les particules en oxyde céramique et le composé à raison d'au moins 30% en masse par rapport au poids total de la suspension. L'imprégnation par la suspension peut être effectuée par tout moyen connu en soi, comme une spatule ou un racloir.

Une deuxième strate fibreuse à l'état sec est ensuite déposée sur la première strate fibreuse imprégnée (étape E2). La deuxième strate fibreuse déposée est superposée à la première strate fibreuse. La deuxième strate fibreuse déposée est ensuite imprégnée par la suspension. Dans l'exemple de la figure 1, les strates continuent d'être déposées à l'état sec puis à être imprégnées par la suspension jusqu'à obtenir un empilement ayant le nombre souhaité de strates imprégnées.

Comme évoqué plus haut, le milieu liquide de la suspension présente une vitesse d'évaporation réduite. Cela permet, en particulier, de disposer de plus de temps pour réaliser l'empilement sans nécessiter l'emploi de précautions particulières, simplifiant ainsi la mise en œuvre du procédé.

La suspension comporte au moins les particules et le composé à l'état liquide. Le composé peut être choisi parmi : le glycérol, les esters lactiques, le diméthyl-2-méthylglutarate, et leurs mélanges.

A titre d'exemple d'esters lactiques utilisables, on peut citer les produits disponibles sous les références « galaster IPL 98 » (pression de vapeur saturante de 170 Pa à 20°C) ou « galaster NPL 98.5 » (pression de vapeur saturante de 110 Pa à 20°C) commercialisés par la société Galactic. Le diméthyl-2-méthylglutarate a une pression de vapeur saturante de 6,3 Pa à 20°C. Le glycérol a, quant à lui, une pression de vapeur saturante inférieure à 0,3 Pa à 20°C.

Le milieu liquide de la suspension comprend au moins le composé et éventuellement un solvant, différent dudit composé. Le solvant peut par exemple être de l'eau, ou un alcool tel que l'éthanol. Lorsqu'il y a un solvant, le composé peut être soluble ou miscible dans le solvant, ou encore apte à former une émulsion avec le solvant. Dans ce dernier cas, l'ajout d'un dispersant peut être avantageux.

Le fait d'adjoindre ou d'omettre le solvant permet d'adapter la viscosité de la suspension à la nature de la strate fibreuse employée, et d'obtenir ainsi l'imprégnation souhaitée de cette strate.

Les particules peuvent généralement avoir une dimension particulaire moyenne (D50) comprise entre 0,1 µm et 10 µm.

Les particules en oxyde céramique peuvent être choisies parmi les particules d'alumine, de silice, de mullite, ou un mélange de telles particules.

La teneur volumique en particules dans la suspension, par rapport au volume total de celle-ci, peut être supérieure ou égale à 25%, voire être comprise entre 25% et 50%. Cette teneur volumique peut être supérieure ou égale à 35%, voire être comprise entre 35% et 45%, par rapport au volume total de la suspension. Les particules sont présentes en une teneur massique, par rapport au poids total de la suspension, comprise entre 40% et 70%, par exemple entre 40% et 60%.

La teneur massique en composé, par rapport au poids total de la suspension, est par exemple comprise entre 30% et 50%.

Lorsque le milieu liquide comprend un solvant, la teneur massique du solvant, par rapport au poids total de la suspension, peut être supérieure ou égale à 5%. Cette teneur massique peut être comprise entre 5% et 30%, par exemple entre 10% et 30%, par rapport au poids total de la suspension.

La suspension peut, en outre, comporter un liant organique, comme de l'alcool polyvinylique (PVA) ou encore un liant de type acrylique. Lorsque le liant organique est présent, sa teneur massique, par rapport au poids total de la suspension, peut être supérieure ou égale à 1%, et par exemple être comprise entre 1% et 10%.

La suspension peut, en outre, comporter un dispersant. Lorsqu'un dispersant est présent, sa teneur massique, par rapport au poids total de la suspension, peut être supérieure ou égale à 0,1%, par exemple être comprise entre 0,1% et 1,5%, par exemple entre 0,5% et 1%.

Les teneurs indiquées pour les différents constituants de la suspension sont, sauf mention contraire, prises au moment de l'imprégnation des strates fibreuses, et donc en particulier avant séchage du solvant, lorsqu'un tel séchage est réalisé.

On a représenté à la figure 3 un dispositif 1 de compactage par tirage de vide qui peut être mis en œuvre dans le cadre de l'invention.

L'empilement 5 de strates 6 imprégnées par la suspension est présent sur un support 3. L'empilement 5 est présent dans un volume intérieur V délimité par le support 3 et par une membrane flexible 10. Des joints d'étanchéité 12 sont présents entre la membrane 10 et le support 3 afin d'assurer l'étanchéité du volume intérieur V.

L'empilement 5 est positionné entre deux couches 7 d'un tissu d'arrachage afin de faciliter son retrait du dispositif 1, une fois le compactage réalisé.

Le compactage (étape E3) est réalisé par tirage de vide à l'intérieur du volume V par aspiration (flèche A) au travers d'un orifice 14 ménagé dans la membrane 10 flexible. Lors de cette mise sous vide, la membrane 10 applique une pression de compactage (flèche C) sur l'empilement 5 afin de réduire son épaisseur. La pression de compactage appliquée est ici inférieure ou égale à 1 bar.

Comme évoqué plus haut, la suspension s'écoule aisément au sein de l'empilement 5 lors de l'étape de compactage, ce qui permet d'obtenir la répartition souhaitée pour les charges au sein de la porosité de la préforme fibreuse, sans avoir à appliquer une pression élevée lors du compactage. On ne sort toutefois pas du cadre de l'invention lorsque le compactage est effectué par d'autres moyens permettant d'appliquer une pression de compactage plus élevée, comme une presse ou un autoclave. La réalisation du compactage par tirage de vide demeure toutefois préférentielle.

On obtient, à l'issue de l'étape de compactage, une préforme imprégnée par le milieu liquide dans lequel les particules en céramique oxyde sont dispersées. On peut obtenir une réduction d'épaisseur de l'empilement d'au moins 10% lors du compactage.

Le solvant, éventuellement présent dans le milieu liquide, peut être éliminé par séchage de la préforme chargée (étape E4). Une température comprise entre 50°C et 180°C peut être imposée durant ce séchage. La durée du séchage peut être supérieure ou égale à 1 heure, voire être comprise entre 1 heure et 24 heures. Le séchage peut être effectué alors que la pression de compactage est appliqué sur l'empilement, c'est-à-dire ici alors que le vide est tiré dans le volume intérieur V et que la membrane 10 est en appui sur l'empilement 5, ou être réalisé après le compactage.

Après compactage et séchage éventuel, une matrice est formée dans la porosité de la préforme afin d'obtenir la pièce en matériau composite. La préforme est destinée à former le renfort fibreux de la pièce. La matrice est formée à partir des particules par frittage (étape E5). La matrice est une matrice oxyde, telle qu'une matrice d'alumine. Le frittage peut être effectué sous air. Le frittage peut être effectué à une température supérieure ou égale à 1000°C, par exemple comprise entre 1000°C et 1200°C.

La figure 2 concerne une variante de procédé dans lequel l'empilement est obtenu par dépôt de strates pré-imprégnées par la suspension (étape 20). Dans ce cas, les strates ont été imprégnées avant leur dépôt. Une fois l'empilement réalisé, le procédé est poursuivi d'une manière similaire à celle décrite en lien avec la figure 1 : compactage pour obtenir la préforme (étape E30), séchage éventuel de la préforme chargée (étape E40) et frittage des particules afin d'obtenir la pièce en matériau composite (étape 50).

D'une manière générale, les strates fibreuses 6 peuvent être des nappes unidirectionnelles ou des textures bidimensionnelles. Les strates peuvent encore être des textures d'un tissu tridimensionnel.

Les strates 6 fibreuses peuvent être déposées une par une ou, en variante, par groupes de plusieurs strates lors de la formation de l'empilement 5.

L'expression « compris(e) entre ... et ... » doit se comprendre comme incluant les bornes.

## Revendications

1. Procédé de fabrication d'une préforme fibreuse chargée de particules, le procédé comprenant au moins l'étape suivante :
- formation de la préforme chargée par compactage d'un empilement (5) d'une pluralité de strates fibreuses (6) imprégnées par une suspension de particules en oxyde céramique dans un milieu liquide,
le procédé étant **caractérisé en ce que** le milieu liquide comporte au moins un composé ayant une pression de vapeur saturante inférieure à 2,3 kPa à 20°C, ce composé étant présent en une teneur massique supérieure ou égale à 30% par rapport au poids total de la suspension, les particules étant présentes en une teneur massique, par rapport au poids total de la suspension, comprise entre 40% et 70%.

2. Procédé selon la revendication 1, dans lequel le composé a une pression de vapeur saturante inférieure ou égale à 0,6 kPa à 20°C.

3. Procédé selon la revendication 1 ou 2, dans lequel le composé est choisi parmi : le glycérol, les esters lactiques, le diméthyl-2-méthylglutarate, et leurs mélanges.

4. Procédé selon la revendication 3, dans lequel le composé est le glycérol.

5. Procédé selon l'une quelconque des revendications 1 à 4, dans lequel le compactage est effectué par tirage de vide.

6. Procédé selon l'une quelconque des revendications 1 à 5, dans lequel les particules sont présentes en une teneur massique, par rapport au poids total de la suspension, comprise entre 40% et 60%.

7. Procédé selon l'une quelconque des revendications 1 à 6, dans lequel le milieu liquide comprend :
- le composé en une teneur massique, par rapport au poids total de la suspension, comprise entre 30% et 50%, et
- optionnellement un solvant, différent du composé, en une teneur massique, par rapport au poids total de la suspension, comprise entre 5% et 30%, et
- optionnellement un liant organique en une teneur massique, par rapport au poids total de la suspension, comprise entre 1% et 15%, et optionnellement
- un dispersant en une teneur massique, par rapport au poids total de la suspension, comprise entre 0,1% et 1,5%, par exemple entre 0,5% et 1%.

8. Procédé selon l'une quelconque des revendications 1 à 7, dans lequel les strates fibreuses (6) sont formées de fibres en oxyde céramique.

9. Procédé selon l'une quelconque des revendications 1 à 8, dans lequel le procédé comprend, avant l'étape de compactage, une étape de formation de l'empilement (5) en déposant les strates (6) à l'état sec, la strate déposée étant imprégnée par la suspension avant le dépôt de la strate suivante.

10. Procédé selon l'une quelconque des revendications 1 à 8, dans lequel le procédé comprend, avant l'étape de compactage, une étape de formation de l'empilement (5) par superposition de strates (6) pré-imprégnées par la suspension.

11. Procédé de fabrication d'une pièce en matériau composite, le procédé comprenant au moins l'étape suivante :
- formation d'une préforme chargée par mise en œuvre d'un procédé selon l'une quelconque des revendications 1 à 10, et
- formation d'une matrice dans la porosité de la préforme chargée par frittage des particules.

## Patentansprüche

1. Verfahren zur Herstellung eines faserigen, mit Partikeln durchsetzten Vorformlings, wobei das Verfahren mindestens den folgenden Schritt umfasst:
- Bilden des durchsetzten Vorformlings durch Verdichtung eines Stapels (5) einer Vielzahl von Faserschichten (6), die mit einer Suspension von Oxidkeramikpartikeln in einem flüssigen Medium getränkt sind,
wobei das Verfahren **dadurch gekennzeichnet ist, dass** das flüssige Medium mindestens eine Verbindung mit einem Sättigungsdampfdruck von weniger als 2,3 kPa bei 20 °C enthält, wobei diese Verbindung, bezogen auf das Gesamtgewicht der Suspension, in einem Massenanteil von mindestens 30 % vorliegt und die Partikel, bezogen auf das Gesamtgewicht der Suspension, in einem Massenanteil zwischen 40 % und 70 % vorliegen.

2. Verfahren nach Anspruch 1, wobei die Verbindung einen Sättigungsdampfdruck von höchstens 0,6 kPa bei 20 °C hat.

3. Verfahren nach Anspruch 1 oder 2, wobei die Verbindung ausgewählt wird aus Glycerin, Milchsäureestern, Dimethyl-2-methylglutarat und ihren Gemischen.

4. Verfahren nach Anspruch 3, wobei die Verbindung Glycerin ist.

5. Verfahren nach einem der Ansprüche 1 oder 4, wobei die Verdichtung durch Evakuierung erfolgt.

6. Verfahren nach einem der Ansprüche 1 bis 5, wobei die Partikel, bezogen auf das Gesamtgewicht der Suspension, in einem Massenanteil von 40 % bis 60 % vorliegen.

7. Verfahren nach einem der Ansprüche 1 bis 6, wobei das flüssige Medium umfasst:
- die Verbindung, bezogen auf das Gesamtgewicht der Suspension, in einem Massenanteil zwischen 30 % und 50 %, und
- optional ein Lösungsmittel, das sich von der Verbindung unterscheidet, bezogen auf das Gesamtgewicht der Suspension, in einem Massenanteil zwischen 5 % und 30 %, und
- optional ein organisches Bindemittel, bezogen auf das Gesamtgewicht der Suspension, in einem Massenanteil zwischen 1 % und 15 %, und optional
- ein Dispergiermittel, bezogen auf das Gesamtgewicht der Suspension, in einem Massenanteil zwischen 0,1 % und 1,5 %, beispielsweise zwischen 0,5 % und 1%.

8. Verfahren nach einem der Ansprüche 1 bis 7, wobei die Faserschichten (6) aus Oxidkeramikfasern bestehen.

9. Verfahren nach einem der Ansprüche 1 bis 8, wobei das Verfahren vor dem Schritt des Verdichtens einen Schritt des Bildens des Stapels (5) umfasst, indem die Schichten (6) im trockenen Zustand abgeschieden werden, wobei die abgeschiedene Schicht vor der Abscheidung der nächsten Schicht mit der Suspension getränkt wird.

10. Verfahren nach einem der Ansprüche 1 bis 8, wobei das Verfahren vor dem Schritt des Verdichtens einen Schritt des Bildens des Stapels (5) durch Übereinanderlegen von Schichten (6), die vorher mit der Suspension getränkt wurden.

11. Verfahren zur Herstellung eines Teils aus Verbundwerkstoff, wobei das Verfahren zumindest den folgenden Schritt umfasst:
- Bilden eines durchsetzten Vorformlings durch die Umsetzung eines Verfahrens nach einem der Ansprüche 1 bis 10, und
- Bilden einer Matrix in der Porosität des durchsetzten Vorformlings durch Sintern der Partikel.

## Claims

1. A method for manufacturing a fiber preform filled with particles, the method comprising at least the following step:
- forming the filled preform by compacting a stack (5) of a plurality of fiber plies (6) impregnated with a suspension of particles of ceramic oxide in a liquid medium,
the method being **characterized in that** the liquid medium includes at least one compound having a saturation vapor pressure less than 2.3 kPa at 20°C, this compound being present at a mass content greater than or equal to 30% relative to the total weight of the suspension, the particles being present at a mass content, relative to the total weight of the suspension, of between 40% and 70%.

2. The method according to claim 1, wherein the compound has a saturation vapor pressure less than or equal to 0.6 kPa at 20°C.

3. The method according to claim 1 or 2, wherein the compound is chosen among: glycerol, lactic esters, dimethyl-2-methylglutarate, and mixtures thereof.

4. The method according to claim 3 wherein the compound is glycerol.

5. The method according to any one of claims 1 to 4, wherein the compaction is performed by vacuum drawing.

6. The method according to any one of claims 1 to 5, wherein the particles are present at a mass content, relative to the total weight of the suspension, of between 40% and 60%.

7. The method according to any one of claims 1 to 6, wherein the liquid medium comprises:
- the compound at a mass content, relative to the total weight of the suspension, of between 30% and 50%, and
- optionally a solvent, different from the compound, at a mass content, relative to the total weight of the suspension, of between 5% and 30%, and
- optionally an organic binder at a mass content, relative to the total weight of the suspension, of between 1% and 15%, and optionally
- a dispersant at a mass content, relative to the total weight of the suspension, of between 0.1% and 1.5%, for example between 0.5% and 1%.

8. The method according to any one of claims 1 to 7, wherein the fiber plies (6) are formed of fibers of ceramic oxide.

9. The method according to any one of claims 1 to 8, wherein the method comprises, prior to the compaction step, a step of forming the stack (5) by depositing the plies (6) in the dry state, the deposited ply being impregnated with the suspension before the deposition of the next ply.

10. The method according to any one of claims 1 to 8, wherein the method comprises, prior to the compaction step, a step of forming the stack (5) by superposition of plies (6) pre-impregnated with the suspension.

11. A method for manufacturing a part made of composite material, the method comprising at least the following step:
- forming a filled preform by implementing a method according to any one of claims 1 to 10, and
- forming a matrix in the porosity of the preform filled by sintering the particles.
